(19) Europäisches Patentamt
European Patent Office
Office européen des brevets

(11)  **EP 1 570 917 B1**

(12)                **EUROPEAN PATENT SPECIFICATION**

(45) Date of publication and mention
of the grant of the patent:
**10.06.2009   Bulletin 2009/24**

(51) Int Cl.:
***B05D 5/08*** (2006.01)

(21) Application number: **04075603.3**

(22) Date of filing: **01.03.2004**

(54) **Method of coating a substrate with a fluoropolymer dispersion**

Verfahren zum Beschichten eines Gegenstands mit einer fluorhaltigen Kunststoffsdispersion

Procédé de revêtement d'un substrat avec une dispersion de polymère fluoré

(84) Designated Contracting States:
**AT BE BG CH CY CZ DE DK EE ES FI FR GB GR HU IE IT LI LU MC NL PL PT RO SE SI SK TR**

(43) Date of publication of application:
**07.09.2005   Bulletin 2005/36**

(73) Proprietor: **3M Innovative Properties Company**
**St. Paul MN 55133-3427 (US)**

(72) Inventors:
• **Dadalas, Michael**
**1831 Diegem (BE)**
• **Hintzer, Klaus**
**1831 Diegem (BE)**
• **Loehr, Gernot**
**1831 Diegem (BE)**
• **Zipplies, Tilman**
**1831 Diegem (BE)**

(74) Representative: **Kurz, Arnd et al**
**3M ESPE AG**
**3M Office of Intellectual Property Counsel**
**ESPE Platz**
**82229 Seefeld (DE)**

(56) References cited:
**EP-A- 0 818 506          EP-A- 1 364 972**
**WO-A-01/79332           WO-A-03/051988**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

1. Field of the invention

The present invention provides a method of coating a substrate having a surface defined by a layer of fluoropolymer. In particular, the present invention relates to a method of coating a substrate with a melt-processable fluoropolymer, more in particular with a thermoplastic fluoropolymer.

2. Background of the invention

Fluoropolymers, i.e. polymers having a fluorinated backbone, have been long known and have been used in a variety of applications because of several desirable properties such as heat resistance, chemical resistance, weatherability, UV-stability etc... The various fluoropolymers are for example described in "Modem Fluoropolymers", edited by John Scheirs, Wiley Science 1997. The fluoropolymers may have a partially fluorinated backbone, generally at least 40% by weight fluorinated, or a fully fluorinated backbone. Particular examples of fluoropolymers include polytetrafluoroethylene (PTFE), copolymers of tetrafluoroethylene (TFE) and hexafluoropropylene (HFP) (FEP polymers), perfluoroalkoxy copolymers (PFA), ethylene-tetrafluoroethylene (ETFE) copolymers, terpolymers of tetrafluoroethylene, hexafluoropropylene and vinylidene fluoride (THV) and polyvinylidene fluoride polymers (PVDF).

The fluoropolymers may be used to coat substrates to provide desirable properties thereto such as for example chemical resistance, weatherability, anti-adhesion, dirt repellency, water- and oil repellency etc... For example aqueous dispersions of fluoropolymer may be used to coat kitchenware, to impregnate fabric or textile e.g. glass fabric, to coat paper or polymeric substrates. Coating systems containing fluoropolymers are described for example in US 3,142,665, 3,790,403, 4,252,859 and EP 525 660. In order to prevent problems that may occur if the fluoropolymer coating is applied too thickly, in particular crack formation, multiple coat coating systems have been proposed as for example in US 5,576,381 and US 2002/0150778.

A frequently used method for producing aqueous dispersions of fluoropolymers involves aqueous emulsion polymerization of one or more fluorinated monomers usually followed by an upconcentration step to increase the solids content of the raw dispersion obtained after the emulsion polymerization. The aqueous emulsion polymerization of fluorinated monomers generally involves the use of a fluorinated surfactant. Frequently used fluorinated surfactants include perfluorooctanoic acids and salts thereof, in particular ammonium perfluorooctanoic acid. Further fluorinated surfactants used include perfluoropolyether surfactants such as disclosed in EP 1059342, EP 712882, EP 752432, EP 816397, US 6,025,307, US 6,103,843 and US 6,126,849. Still further surfactants that have been used are disclosed in US 5,229,480, US 5,763,552, US 5,688,884, US 5,700,859, US 5,804,650, US 5,895,799, WO 00/22002 and WO 00/71590.

US 6,153,688 discloses dispersions ofpolytetrafluoroethylene (PTFE) that contain between 35 and 65% by weight of PTFE and between 2 and 10% by weight relative to PTFE of a polyoxyethylene alkyl ether non-ionic surfactant. It is taught that such dispersions offer the advantage of being free of aromatic group containing surfactants while still having good coating properties as the viscosity at room temperature is low. But, the dispersions are apparently prepared in the known way with the use of fluorinated surfactant and therefore are believed to have a high amount of fluorinated surfactant.

Fluorinated surfactants typically used in aqueous emulsion polymerization such as perfluoro octanoic acid or perfluorosulfonic acids are expensive and environmentally disadvantageous. Accordingly, measures have been taken to either completely eliminate the fluorinated low molecular weight surfactants from aqueous dispersion or at least to minimize the amount thereof in an aqueous dispersion. For example, US 4,369,266 discloses a method whereby part of fluorinated surfactant is removed through ultrafiltration. In the latter case, the amount of fluoropolymer solids in the dispersion is increased as well, i.e. the dispersion is upconcentrated while removing fluorinated surfactant. WO 00/35971 further discloses a method in which the amount of fluorinated surfactant is reduced by contacting the fluoropolymer dispersion with an anion exchanger.

Fluoropolymer dispersions that have a reduced amount of fluorinated surfactant or that are free of fluorinated surfactant may however present some disadvantages or undesired properties in particular circumstances. For example, WO 03/20836 discloses the addition of an anionic hydrocarbon surfactant to a fluoropolymer dispersion that is free of or substantially free of fluorinated surfactant, in order to avoid an undesirable viscosity increase that may be observed when upconcentrating the dispersions.

It has now also been observed that aqueous dispersions of melt-processable fluoropolymers that contain no or only a small amount of fluorinated surfactant may display poor wetting properties, especially on low energy surfaces, such as a surface defined by a layer of fluoropolymer. Accordingly, coating of surfaces defined by a layer of fluoropolymer may present problems with such dispersions.

It would thus be desirable to solve or mitigate aforementioned problem. Desirably, such solution is also environmentally friendly, cost effective and compatible with existing coating methods and components used therein. Desirably, good coating properties with the dispersion of melt-processable fluoropolymer are obtained over a commercially feasible range of operating conditions, in particular with respect to ambient conditions. Further, desirably, the solution provides a coating having good film forming properties comparable to or better than obtained with dispersions that contain fluorinated surfactant in large amounts.

3. Brief description

The present invention provides a method of coating a substrate having a surface defined by a layer of fluoropolymer, the method comprising

(i) providing an aqueous dispersion comprising:

(a) particles of melt-processable fluoropolymer in an amount of 30 to 70% by weight;
(b) fluorinated surfactant in an amount of not more than 250ppm based on fluoropolymer solids of the aqueous dispersion;
(c) a non-ionic surfactant comprising an ethoxylated aliphatic alcohol in an amount of 2 to 15% by weight based on total solids of the aqueous dispersion; and wherein the aqueous dispersion is free or substantially free of aromatic group containing non-ionic surfactants;

(ii) optionally diluting and/or adding further components to said dispersion so as to obtain a coating composition;
(iii) applying said coating composition on at least part of said surface of said substrate defined by said layer of said fluoropolymer.

With the term "melt-processable" is meant that the fluoropolymer will flow when heated sufficiently above the glass transition temperature, or if semicrystalline, above the melt temperature, and becomes solid when cooled. Additionally, the fluoropolymer should be processable in its molten state by conventional melt-processing equipment.

The term " layer of fluoropolymer" as used herein is intended to include not only layers consisting only of fluoropolymer but also layers comprising fluoropolymer and optional further components. Generally, the layer of fluoropolymer will comprise the fluoropolymer in an amount of at least 10% by weight, preferably in an amount of at least 30% by weight based on the weight of the fluoropolymer layer.

By the term "substantially free of aromatic group containing non-ionic surfactants" is generally meant that such surfactants are not present in amounts that would negatively effect the coating properties of the dispersion. Generally, the amount of aromatic group containing non-ionic surfactants should not be more than 0.1% by weight based on the total weight of non-ionic surfactants, preferably not more than 0.05% by weight.

The use of a non-ionic surfactant comprising an ethoxylated aliphatic alcohol provides the aqueous dispersion with good wetting properties, especially on energy surfaces defined by a layer of fluoropolymer. Furthermore, after drying, excellent film forming properties can be obtained on a variety of substrates having a layer of fluoropolymer defining a surface to be coated.

4. Detailed description

The non-ionic surfactant used in the aqueous dispersion comprises an ethoxylated aliphatic alcohol. According to a particular embodiment in connection with the present invention, the non-ionic surfactant corresponds to formula (I) :

$$R^1\text{-O-}[CH_2CH_2O]_n\text{-}R^2 \qquad (I)$$

wherein $R^1$ represents a linear or branched aliphatic hydrocarbon group having at least 6 carbon atoms, $R^2$ represents hydrogen or a $C_1$-$C_3$ alkyl group and n has a value of 2 to 40, preferably 3 to 25, more preferably 5 to 12. The aliphatic hydrocarbon group $R^1$ includes saturated and unsaturated aliphatic groups having at least 6 carbon atoms, preferably having between 6 and 40 carbon atoms, more preferably between 8 and 18 carbon atoms. Such aliphatic groups may be linear or branched and may contain cyclic structures. The aliphatic hydrocarbon group should be free or substantially free from aromatic groups. Non-ionic surfactants comprising an ethoxylated aliphatic alcohol, which contain no aromatic ring in the structure, are environmentally acceptable as they do not convert into harmful organic aromatic compounds on thermal decomposition, giving rise to no air pollution.

The non-ionic surfactant, comprising an ethoxylated aliphatic alcohol is generally present in the aqueous dispersion in an amount of 2% by weight to 15% by weight relative to the total weight of solids in the aqueous dispersion.

Several non-ionic surfactants comprising an ethoxylated aliphatic alcohol are commercially available and include for example Genapol® X-080, isotridecanol ethoxylated with about 8 ethoxy groups ; Genapol® UD-070 and UD-080, undecyl ethoxylated with about 7 and 8 ethoxy groups respectively, commercially available from Clariant GmbH ; Tergitol™15-S, secondary alcohol ethoxylates and Tergitol™ TMN, branched secondary alcohol ethoxylates, commercially available from Dow.

The fluoropolymer in the aqueous dispersion is a melt-processable fluoropolymer. The fluoropolymer typically comprises repeating units derived from a fluoroolefin such as tetrafluoroethylene (TFE) or chlorotrifluoroethylene (CTFE) and repeating units derived from at least one comonomer such as a further fluorinated monomer and/or non-fluorinated monomer. Examples of fluorinated comonomers include perfluoro alkyl vinyl monomers such as e.g. hexafluoropropylene (HFP), fluorinated allyl ethers and fluorinated vinyl ethers, in particular perfluorinated vinyl ethers (PVE), vinylidene fluoride and vinylfluoride. Examples of non-fluorinated comonomers include olefins such as ethylene and propylene.

Particular examples of PVE monomers include those corresponding to the formula:

$$CF_2=CF-O-R_f \qquad\qquad (II)$$

wherein $R_f$ represents a perfluorinated aliphatic group that may contain one or more oxygen atoms. Preferably, the perfluorovinyl ethers correspond to the general formula:

$$CF_2=CFO(R^1_fO)n\ (R^2_fO)_mR^3_f \qquad\qquad (II)$$

wherein $R^1_f$ and $R^2_f$ are different linear or branched perfluoroalkylene groups of 2 to 6 carbon atoms, m and n are independently 0 to 10, and $R^3_f$ is a perfluoroalkyl group of 1 to 6 carbon atoms. Examples of perfluorovinyl ethers according to the above formulas include perfluoro-n-propylvinyl ether (PPVE-1), perfluoro-2-propoxypropylvinyl ether (PPVE-2), perfluoro-3-methoxy-n-propylvinyl ether, perfluoro-2-methoxy-ethylvinyl ether, perfluoromethylvinyl ether (PMVE), and $CF_3$-$(CF_2)_2$-O-$CF(CF_3)$-$CF_2$-O-$CF(CF_3)$-$CF_2$-O-$CF=CF_2$.

Fluorinated alkyl vinyl monomers that may be used include those that correspond to the general formula:
$CF_2=CF-R^4_f$ (III) or
$CH_2=CH-R^4_f$ (IV)
wherein $R^4_f$ represents a perfluoroalkyl group of 1 to 10, preferably 1 to 5 carbon atoms. A typical example is hexafluoropropylene.

The melt-processable fluoropolymer can be an amorphous fluoropolymer (also known in the art as elastomers) or a semi-crystalline fluoropolymer (also known in the art as fluorothermoplasts). Particular suitable melt-processable fluoropolymers include semi-crystalline fluoropolymers. Semi-crystalline fluoropolymers or fluorothermoplasts are polymers that generally have pronounced melting peaks and that generally have crystallinity.

Typically the fluorothermoplasts, have a melting point between 100 and 330°C, preferably between 140 and 310°C. Examples of fluorothermoplasts include copolymers consisting predominantly of TFE and an amount of one or more comonomer(s), e.g. 1 to 50, preferably 1 to 10 mol %. Examples of fluorothermoplasts include semicrystalline copolymers of tetrafluoroethylene (TFE) and ethylene (ETFE), copolymers of TFE and HFP (FEP), copolymers of TFE, HFP and VDF (THV), copolymers of TFE and fluoroalkoxy comonomers, such as PPVE-1 (PFA) and copolymers of TFE, E, HFP and vinyl ether. Examples of melt-processable fluoroelastomers include for example copolymers of TFE and PVE and copolymers of VDF and HFP.

The aqueous dispersion contains particles of melt-processable fluoropolymer. Generally, the average particle size of the melt-processable fluoropolymer is between 30 and 400nm, typically between 40 and 350nm. The aqueous dispersion for use in the method of the invention is generally obtained by starting from a so-called raw dispersion of melt processable fluoropolymer, which may result from an aqueous emulsion polymerization of fluorinated monomers. In the emulsion polymerization, the fluorinated monomers and optionally further non-fluorinated comonomers are polymerized in the aqueous phase generally in the presence of a free radical initiator and a fluorinated surfactant, preferably a nontelogenic surfactant. Any of the fluorinated surfactants known to be suitable for use in aqueous emulsion polymerization of fluorinated monomers can be used. Particularly suitable fluorinated surfactants are typically anionic fluorinated surfactants that are non-telogenic and include those that correspond to the formula:

$$Q-R^5_f-Z-M_a \qquad\qquad (V)$$

wherein Q represents hydrogen, Cl or F whereby Q may be present in terminal position or not; $R^5_f$ represents a linear or branched perfluorinated alkylene having 4 to 15 carbon atoms; Z represents $COO^-$ or $SO_3^-$, $M_a$ represents a cation including an alkali metal ion or an ammonium ion.

Representative examples of surfactants according to above formula (V) are perfluoroalkanoic acids and salts thereof such as perfluorooctanoic acid and its salts, in particular ammonium salts. Further fluorinated surfactants that may be used include perfluoropolyether surfactants such as disclosed in EP 1059342, EP 712882, EP 752432, EP 816397, US 6,025,307, US 6,103,843 and US 6,126,849. Still further surfactants that have been used are disclosed in US 5,229,480, US 5,763,552, US 5,688,884, US 5,700,859, US 5,804,650, US 5,895,799, WO 00/22002 and WO 00/71590.

Because of some environmental concerns that have been raised against the presence of the fluorinated surfactants typically used in the aqueous emulsion polymerization and because such surfactants are fairly expensive, methods have been developed to remove and recover the fluorinated surfactant from aqueous fluoropolymer dispersions. The amount of fluorinated surfactant in an aqueous dispersion of fluoropolymers may be reduced in a number of ways.

According to one embodiment to reduce the amount of fluorinated surfactant, a non-ionic surfactants comprising an ethoxylated aliphatic alcohol, e.g. as disclosed above, is added to the fluoropolymer dispersion and the fluoropolymer dispersion is then contacted with an anion exchanger. Such a method is disclosed in detail in WO 00/35971. The anion exchange process is preferably carried out in essentially basic conditions. Accordingly, the ion exchange resin will preferably be in the OH- form although anions like fluoride or sulfate may be used as well. The specific basicity of the ion exchange resin is not very critical. Strongly basic resins are preferred because of their higher efficiency in removing the fluorinated surfactant. The process may be carried out by feeding the fluoropolymer dispersion through a column that contains the ion exchange resin or alternatively, the fluoropolymer dispersion may be stirred with the ion exchange resin and the fluoropolymer dispersion may thereafter be isolated by filtration. With this method, the amount of fluorinated surfactant can be reduced to levels below 250ppm or even below 100ppm.

In case the fluorinated surfactant is in its free acid form and is steam-volatile, the following method may alternatively be used to reduce the amount of fluorinated surfactant. A steam-volatile fluorinated surfactant in its free acid form may be removed from aqueous fluoropolymer dispersions, by adding a non-ionic surfactant, preferably a non-ionic surfactant comprising an ethoxylated alcohol, to the aqueous fluoropolymer dispersion and, at a pH-value of the aqueous fluoropolymer dispersion below 5, removing the steam-volatile fluorinated surfactant by distillation until the concentration of steam-volatile fluorinated surfactant in the dispersion reaches the desired value as disclosed in DE 100 18 853.

Still further, the amount of fluorinated surfactant may be reduced to the desired level through the use of ultrafiltration as disclosed in US 4,369,266.

Generally, this method will simultaneously also increase the solids amount of the dispersion and thus may be used to simultaneously remove the fluorinated surfactant and upconcentrate the dispersion.

The amount of polymer solids that can be obtained at the end of the emulsion polymerization is typically between 10% and 45% by weight. For sake of economy and convenience, the fluoropolymer dispersion preferably should typically have between 30% and 70% by weight of polymer solids. Typically, the solids content in the fluoropolymer dispersion is between 40 and 65% by weight. When the solids content obtained at the end of the polymerization is too low, the dispersion will generally be upconcentrated to achieve the desired solids content. Generally subsequent to reducing the level of fluorinated surfactant the aqueous dispersion may be upconcentrated. It is however also possible to reduce the amount of fluorinated surfactant in an upconcentrated dispersion or simultaneously with the upconcentration as described above.

To increase the amount of fluoropolymer solids, any suitable or known upconcentration technique may be used. Suitable methods for upconcentration include ultrafiltration, thermal upconcentration, thermal decantation and electrodecantation as disclosed in GB 642,025. The upconcentration techniques are typically carried out in the presence of a non-ionic surfactant, that is added in order to stabilize the dispersion in the upconcentration process. In a preferred embodiment of the present invention, the upconcentration is carried out in the presence of a non-ionic surfactant comprising an ethoxylated aliphatic alcohol. The amount of said non-ionic surfactant that should generally be present in the dispersion for upconcentration is typically between 2% by weight and 15% by weight, preferably between 3% by weight and 10% by weight

The method of ultrafiltration comprises the steps of (a) adding the non-ionic surfactant to the dispersion that desirably is to be upconcentrated and (b) circulating the dispersion over a semi-permeable ultra-filtration membrane to separate the dispersion into a fluorinated polymer dispersion concentrate and an aqueous permeate. The circulation is typically at a conveying rate of 2 to 7 meters per second and effected by pumps which keep the fluorinated polymer free from contact with components which cause frictional forces.

To increase the fluoropolymer solids in the aqueous dispersion, thermal decantation may also be employed. In this method, the non-ionic surfactant is added to the fluoropolymer dispersion that is desirably upconcentrated and the dispersion is then heated so as to form a supernatant layer that can be decanted and that typically contains water and some non-ionic surfactant while the other layer will contain the concentrated dispersion. This method is for example disclosed in US 3,037,953 and EP 818 506. Thermal upconcentration involves heating of the dispersion and removal of water under a reduced pressure until the desired concentration is obtained.

After reducing the level of fluorinated surfactant and optional upconcentration of the fluoropolymer dispersion, an aqueous dispersion will be obtained comprising fluorinated surfactant in an amount of not more than 250ppm, preferably not more than 100ppm based on the fluoropolymer solids in the dispersion. Frequently, the level of fluorinated surfactant may be reduced to 50ppm or less or to even 30ppm or less. The dispersion will further contain a non-ionic surfactant comprising an ethoxylated aliphatic alcohol. The amount thereof should generally be between 2 and 15% by weight based on the weight of fluoropolymer solids. Typically, the amount of the non-ionic surfactant is between 3 and 10% by weight. The amount of non-ionic surfactant comprising an ethoxylated aliphatic alcohol may result from the amount of stabilizing surfactant used during the removal of the fluorinated surfactant and/or during the optional upconcentration of the dispersion. But the amount of non-ionic surfactant comprising ethoxylated aliphatic alcohol may be adjusted by adding further non-ionic surfactant to achieve a desired level of said surfactant within the aforementioned range in the dispersion.

The aqueous dispersion used in the method typically has an amount of melt-processible fluoropolymer solids in the range of 30 to 70% by weight, preferably between 40 and 65% by weight. However, in making a final coating solution, the aqueous dispersion may be diluted with water and/or solvents and/or may be combined with further coating components or ingredients.

For example, in metal coating, in particular for coating cookware, the final coating composition may be obtained by further blending heat resistant polymers such as polyamide imide, polyimide or polyarylen sulphide with the aqueous dispersion. Still further ingredients such as pigments and mica particles may be added as well to obtain the final coating composition. Such additional components are typically dispersed in organic solvents such as toluene, xylene or N-methylpyrrolidone. The fluoropolymer dispersions typically represent about 10 to 95 % by weight of the final composition. Coating compositions for metal coatings and components used therein have been described in e.g. WO 02/78862, WO 94/14904 , EP 22257 and US 3,489,595.

The aqueous coating composition used in the method of the present invention, comprising melt-processible fluoropolymer, fluorinated surfactant in an amount of not more than 250 ppm, based on fluoropolymer solids of the aqueous dispersion and non-ionic surfactant comprising ethoxylated aliphatic alcohol and optional further components generally has good wetting and film properties when coated on a substrate having a surface defined by a layer of fluoropolymer. The properties are better than similar dispersions that contain aromatic group containing non-ionic surfactants such as eg. Triton™ X-100.

The aqueous dispersion can be used to coat a variety of substrates having a surface defined by a layer of fluoropolymer. Examples of suitable substrates include metal, often aluminium or stainless steel used for cookware or industrial applications, polymeric substrates such as polyester and polypropylene substrates or the substrate can be paper. The substrate can further be textile or fabric and in particular glass fiber or fabric. The substrate is further characterised by having a surface defined by a layer of fluoropolymer.

The fluoropolymer on a surface of the substrate can be any fluoropolymer that has a partially or fully fluorinated backbone. The fluoropolymer of the layer defining the surface of the substrate may be melt-processible or not. Typically the fluoropolymer is a polymer that has a backbone that is at least 40% by weight fluorinated, preferably at least 50% by weight, more preferably at least 60% by weight. The fluoropolymer may also have a fully fluorinated backbone such as for example in PTFE. The fluoropolymer may be a homo- or copolymer and be a mixture of different fluoropolymers. Examples of fluoropolymers include copolymers of tetrafluoroethylene, especially those of tetrafluoroethylene/hexafluoropropylene, tetrafluoroethylene/perfluoro(alkylvinyl) ethers with perfluoroalkyl radicals having 1 to 5 C atoms, in particular perfluoro(n-propyl-vinyl) ethers, tetrafluoroethylene/ethylene, tetrafluoroethylene/trifluorochloroethylene, trifluorochloroethylene/ethylene, tetrafluoroethylene/vinylidene fluoride and hexafluoropropylene/vinylidene fluoride, and terpolymers of tetrafluoroethylene/perfluoro(alkylvinyl) ether/hexafluoropropylene, tetrafluoroethylene/ethylene/hexafluoropropylene and tetrafluoroethylene/vinylidene fluoride/hexafluoropropylene, or of quaternary polymers of tetrafluoroethylene/vinylidene fluoride/hexafluoropropylene/perfluoro(alkylvinyl) ethers and tetrafluoroethylene/ethylene/hexafluoropropylene/ perfluoro(alkylvinyl) ethers. Further fluoropolymers include polyvinyl fluoride, polyvinylidene fluoride and polytrifluorochloroethylene. Preferred fluoropolymer is a homopolymer of TFE.

A wide variety of coating methods can be used to apply the coating composition, such as brushing, spraying, dipping, rolling, spreading and the like. A preferred coating method includes dipping. A substrate to be coated can typically be contacted with the aqueous coating composition at room temperature (typically, about 20°C to 25°C). Following application, the treated substrate can be dried at ambient or elevated temperatures. For example, the treated substrate may be dried by conveying it through an oven that at entrance has a temperature of 70°C and which temperature increases throughout the oven upto for example 400°C at the end of the oven.

The invention will now be further illustrated with reference to the following examples, without however the intention to limit the invention thereto.

**EXAMPLES**

Abbreviations:

PTFE : polytetrafluoroethylene
APFOA : ammonium salt of perfluorooctanoic acid
Genapol™ X-080 : non-ionic ethoxylated alcohol, commercially available from Clariant GmbH
TFX 5060 : PTFE dispersion, commercially available from 3M, Dyneon
TFX 5065 : PTFE dispersion, commercially available from 3M, Dyneon

Test methods

- Melt Flow Index (MFI) was determined according to ASTM D1238 at 372°C/5kg. The MFI is expressed as g/10min.
- The melt point was determined according to ASTM D4591
- Surface tension was measured according to DIN 53914 (plate method) at 25°C.

PTFE-precoated glass fabric

Glass fabric (type US2116, 105g/m$^2$, available from PD-Interglas Technologies AG) was dip coated with TFX 5060, using 2 passes, followed by dip coating with TFX 5065, using two passes, to obtain a final coating weight of 206g/m$^2$. In between each pass, the fabric was dried and sintered in an oven at a temperature starting at 70°C increasing up to 400°C.

Example 1

A fluoropolymer dispersion of TFE/PPVE-1 (96/4 w%; MFI=16, meltpoint=310°C) with a particle size of about 200 nm and having a solids content of 30% by weight was obtained from an emulsion polymerization. To the dispersion were added 5% by weight of Genapol™ X-080 based on the amount of solids in the dispersion. The dispersion contained about 0.1% by weight of APFOA based on total weight of the dispersion (=4350ppm based on polymer solids). The emulsion polymer was contacted with an anion exchange resin so as to reduce the amount of APFOA in the dispersion to 7ppm based on total weight of the dispersion (=30ppm based on polymer solids). The dispersion was thermally upconcentrated. The dispersion thus obtained was used to coat the PTFE-precoated glass fabric by dip coating. The dispersion had good wetting properties on the PTFE-precoated glass fabric. A smooth coating with a coating weight of 13g/cm$^2$ was obtained. The measured surface tension of the dispersion was 28.7mN/m.

Comparative example C-1

Comparative example C-1 was carried out essentially as example 1, but using 5% Triton™ X-100, an ethoxylated p-isooctyl phenol instead of Genapol™ X-080. Very poor wetting of the PTFE-precoated glass fabric was observed. The surface tension of the obtained dispersion was 34 mN/m.

Comparative example 2

Comparative example 1 was repeated except that the fluorinated surfactant APFOA was not removed from the dispersion. A good coating was obtained and the surface tension of the dispersion was 29.6 mN/m.

**Claims**

**1.** Method of coating a substrate having a surface defined by a layer of fluoropolymer, the method comprising

    (i) providing an aqueous dispersion comprising:

        (a) particles of melt-processable fluoropolymer in an amount of 30 to 70% by weight;

(b) fluorinated surfactant in an amount of not more than 250ppm based on fluoropolymer solids of the aqueous dispersion;
(c) a non-ionic surfactant comprising an ethoxylated aliphatic alcohol in an amount of 2 to 15% by weight based on total solids of the aqueous dispersion;

and wherein the aqueous dispersion is free or substantially free of aromatic group containing non-ionic surfactants;
(ii) applying said coating composition on at least part of said surface of said substrate defined by said layer of said fluoropolymer.

2. Method according to claim 1 wherein said substrate comprises a metal substrate or a fabric.

3. Method according to claim 1 or 2 wherein said melt-processible fluoropolymer is fluorothermoplast.

4. Method according to claim 3 wherein said fluorothermoplast has a melting point between 100 and 330°C.

5. Method according to any of the previous claims wherein said fluoropolymer is selected from the group consisting of a copolymer of tetrafluoroethylene and hexafluoropropylene and vinylidene fluoride, a copolymer of tetrafluoroethylene and a fluorinated vinyl ether, a copolymer of tetrafluoroethylene, ethylene and hexafluoropropylene and a copolymer of tetrafluoroethylene, hexafluoroethylene and a perfluorinated vinyl ether.

6. Method according to any of the previous claims wherein said ethoxylated aliphatic alcohol corresponds to the formula:

$$R^1\text{-}O\text{-}[CH_2CH_2O]_n\,R^2$$

wherein $R^1$ represents a linear or branched aliphatic hydrocarbon group having at least 6 carbon atoms, $R^2$ represents hydrogen, n has a value of 2 to 40.

7. Method according to claim 6 wherein n has a value of 5 to 12 and wherein $R^1$ has between 8 and 18 carbon atoms.

**Patentansprüche**

1. Verfahren zum Beschichten eines Substrats mit einer Oberfläche, die durch eine Fluorpolymerschicht definiert ist, wobei das Verfahren umfasst:

(i) Bereitstellen einer wässrigen Dispersion, umfassend:

(a) Partikel aus schmelzverarbeitbarem Fluorpolymer in einer Menge von 30 bis 70 Gew.-%;
(b) fluoriertes oberflächenaktives Mittel in einer Menge von nicht mehr als 250 ppm, bezogen auf Fluorpolymerfeststoffe der wässrigen Dispersion;
(c) ein nicht-ionisches oberflächenaktives Mittel, umfassend einen ethoxylierten aliphatischen Alkohol in einer Menge von 2 bis 15 Gew.-%, bezogen auf die Gesamtfeststoffe der wässrigen Dispersion;

und wobei die wässrige Dispersion frei oder im Wesentlichen frei von aromatische Gruppen enthaltenden, nicht-ionischen, oberflächenaktiven Mitteln ist;
(ii) Anwenden der Beschichtungszusammensetzung auf mindestens einen Teil der Oberfläche des Substrats, definiert durch die Schicht des Fluorpolymers.

2. Verfahren nach Anspruch 1, wobei das Substrat ein Metallsubstrat oder ein Textil umfasst.

3. Verfahren nach Anspruch 1 oder 2, wobei das schmelzverarbeitbare Fluorpolymer Fluorthermoplast ist.

4. Verfahren nach Anspruch 3, wobei der Fluorthermoplast einen Schmelzpunkt zwischen 100 und 330°C hat.

5. Verfahren nach einem der vorhergehenden Ansprüche, wobei das Fluorpolymer aus der Gruppe bestehend aus einem Copolymer von Tetrafluorethylen und Hexafluorpropylen und Vinylidenfluorid, einem Copolymer von Tetrafluorethylen und einem fluorierten Vinylether, einem Copolymer von Tetrafluorethylen, Ethylen und Hexafluorpropylen und einem Copolymer von Tetrafluorethylen, Hexafluorethylen und einem perfluorierten Vinylether ausgewählt ist.

**6.** Verfahren nach einem der vorhergehenden Ansprüche, wobei der ethoxylierte aliphatische Alkohol der Formel

$$R^1\text{-O- }[CH_2CH_2O]_n\text{-}R^2$$

entspricht, wobei $R^1$ eine lineare oder verzweigte aliphatische Kohlenwasserstoffgruppe mit mindestens 6 Kohlenstoffatomen bedeutet, $R^2$ Wasserstoff bedeutet, n einen Wert von 2 bis 40 hat.

**7.** Verfahren nach Anspruch 6, wobei n einen Wert von 5 bis 12 hat und $R^1$ zwischen 8 und 18 Kohlenstoffatome hat.

**Revendications**

**1.** Procédé de revêtement d'un substrat comportant une surface définie par une couche de polymère fluoré, le procédé comprenant :

(i) la fourniture d'une dispersion aqueuse comprenant :

(a) des particules de polymère fluoré transformable par fusion dans une quantité de 30 % à 70 % en poids ;
(b) un tensioactif fluoré dans une quantité ne dépassant pas 250 ppm, cette proportion étant exprimée relativement aux solides de polymère fluoré dans la dispersion aqueuse ;
(c) un tensioactif non ionique comprenant un alcool aliphatique éthoxylé dans une quantité de 2 à 15 % en poids, ce pourcentage étant exprimé relativement aux solides totaux dans la dispersion aqueuse ;

et la dispersion aqueuse étant exempte ou quasiment exempte de groupe aromatique contenant des tensioactifs non ioniques.
(ii) l'application de ladite composition de revêtement sur au moins une partie de ladite surface dudit substrat définie par ladite couche dudit polymère fluoré.

**2.** Procédé selon la revendication 1, dans lequel ledit substrat comprend un substrat métallique ou un tissu.

**3.** Procédé selon la revendication 1 ou 2, dans lequel ledit polymère fluoré transformable par fusion est un thermoplaste fluoré.

**4.** Procédé selon la revendication 3, dans lequel ledit thermoplaste fluoré a un point de fusion de 100 à 330 °C.

**5.** Procédé selon l'une quelconque des revendications précédentes, dans lequel ledit polymère fluoré est sélectionné dans le groupe constitué d'un copolymère de tétrafluoroéthylène et d'hexafluoropropylène et de fluorure de vinylidène, un copolymère de tétrafluoroéthylène et d'un éther vinylique fluoré, un copolymère de tétrafluoroéthylène, d'éthylène et d'hexafluoropropylène, et un copolymère de tétrafluoroéthylène, d'hexafluoroéthylène et d'un éther vinylique perfluoré.

**6.** Procédé selon l'une quelconque des revendications précédentes, dans lequel ledit alcool aliphatique éthoxylé correspond à la formule :

$$R^1\text{ -O- }[CH_2CH_2O]_n\text{-}R^2$$

dans laquelle $R^1$ représente un groupe hydrocarbure aliphatique linéaire ou ramifié comportant au moins 6 atomes de carbone, $R^2$ représente l'hydrogène, et n vaut 2 à 40.

**7.** Procédé selon la revendication 6, dans lequel n vaut 5 à 12 et dans lequel $R^1$ comporte de 8 à 18 atomes de carbone.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3142665 A
- US 3790403 A
- US 4252859 A
- EP 525660 A
- US 5576381 A
- US 20020150778 A
- EP 1059342 A
- EP 712882 A
- EP 752432 A
- EP 816397 A
- US 6025307 A
- US 6103843 A
- US 6126849 A
- US 5229480 A
- US 5763552 A
- US 5688884 A
- US 5700859 A
- US 5804650 A
- US 5895799 A
- WO 0022002 A
- WO 0071590 A
- US 6153688 A
- US 4369266 A
- WO 0035971 A
- WO 0320836 A
- DE 10018853
- GB 642025 A
- US 3037953 A
- EP 818506 A
- WO 0278862 A
- WO 9414904 A
- EP 22257 A
- US 3489595 A

**Non-patent literature cited in the description**

- Modem Fluoropolymers. Wiley Science, 1997